# EUROPÄISCHE PATENTSCHRIFT

(11) **EP 3 750 763 B1**
(45) Veröffentlichungstag und Bekanntmachung des Hinweises auf die Patenterteilung: **02.02.2022**
(21) Anmeldenummer: 20177811.5
(22) Anmeldetag: 02.06.2020
(51) Int. Cl.: B60T 13/66, B66F 17/00, B60T 8/18, B60T 8/26, B60T 13/68, B60T 17/22, B66F 9/075

(54) **EINRICHTUNG UND VERFAHREN ZUR ABBREMSUNG EINES FAHRZEUGS MIT EINER FRONTLASTAUFNAHMEVORRICHTUNG**
DEVICE AND METHOD FOR BRAKING A VEHICLE WITH A FRONT LOAD RECEIVING DEVICE
DISPOSITIF ET PROCÉDÉ DE FREINAGE D'UN VÉHICULE DOTÉ D'UN DISPOSITIF RÉCEPTEUR DE CHARGE AVANT

(30) Priorität: 13.06.2019 DE 102019116086
(43) Veröffentlichungstag der Anmeldung: 16.12.2020
(73) Patentinhaber: ZF CV Systems Global GmbH, 3006 Bern (CH)
(72) Erfinder: BRÜTT, Mirko, 30952 Ronnenberg (DE); SABELHAUS, Dennis, 31737 Rinteln (DE)
(74) Vertreter: Copi, Joachim

(56) Entgegenhaltungen:
- WO-A1-2007/078222
- DE-A1- 10 010 011
- DE-A1- 10 304 658
- DE-A1-102005 011 998
- JP-A- 2002 096 999

## Beschreibung

Die Erfindung betrifft eine Einrichtung und ein Verfahren zur Abbremsung eines Fahrzeugs mit einer Frontlastaufnahmevorrichtung, beispielsweise eines Flurförderfahrzeugs, mit Sensoren zur Messung der Masse sowie der Schwerpunktlage einer aufgenommenen Last, mit einer elektronischen Auswertungs- und Steuereinheit zur Auswertung der Sensordaten sowie zur Ermittlung einer maximalen Bremsverzögerung bei Vorwärtsfahrt zur Vermeidung eines Umkippens des Fahrzeugs über die Vorderachse, sowie mit einer von der Auswertungs- und Steuereinheit zur Begrenzung oder Reduzierung des in den Radbremszylindern der Vorderachse wirksamen Bremsdruckes ansteuerbaren, mit einem Antiblockiersystem versehenen hydraulischen oder pneumatischen Bremsanlage.

Flurförderfahrzeuge, wie Gabelstapler, Teleskopradlader, Schaufelradlader und Ackerschlepper mit Frontlader, nehmen zu befördernde Lasten über Ladevorrichtungen, wie Gabeln, Schaufeln und Haken an ihrer Fahrzeugfront auf. Die betreffenden Ladevorrichtungen sind an horizontal und vertikal verfahrbaren Masten oder an längsseitig verstellbaren und um eine Querachse schwenkbaren Tragarmen befestigt. Durch die an der Fahrzeugfront aufgenommene Last liegt der Gesamtschwerpunkt des Fahrzeugs nahe an der Vorderachse sowie meistens auch relativ hoch über der Vorderachse. Dadurch besteht insbesondere bei einer Vorwärtsfahrt die Gefahr, dass das Fahrzeug bei einer Abbremsung aufgrund der dynamischen Verlagerung des Gesamtschwerpunktes nach vorne über die Vorderachse umkippt. Die Kippgefahr des Fahrzeugs ist abhängig von der Masse der aufgenommenen Last sowie deren horizontalen und vertikalen Schwerpunktlage bezüglich der Vorderachse.

Zur Vermeidung eines Umkippens eines Flurförderfahrzeugs sind bereits zahlreiche Einrichtungen und Steuerungsverfahren vorgeschlagen worden. So ist beispielsweise aus der DE 103 04 658 A1 eine Einrichtung und ein Verfahren zur Steuerung der Fahrstabilität eines Flurförderfahrzeugs, insbesondere eines Gabelstaplers, bekannt, mit denen die Masse einer aufgenommenen Last, die Neigung eines Mastes, die Hubhöhe einer Gabel, die auf den Mast wirkenden Kippkräfte sowie die in Längs- und Querrichtung wirksamen Beschleunigungen sensorisch erfasst werden. Aus den sensorisch erfassten Lastdaten und den Kenngrößen des Fahrzeugs werden dann Grenzwerte für die Hubhöhe der Gabel, die Fahrgeschwindigkeit, die Fahrbeschleunigung, den Lenkwinkel und die Neigung des Mastes festgelegt, welche durch eine entsprechende Begrenzung der Antriebs-, Lenk-, Brems- und Laststeuerung nicht überschritten werden können. In einer Notfunktion wird bei einem festgestellten Abkippen eines Vorderrades von einem Bordstein eine Vollbremsung verhindert.

In der DE 10 2005 011 998 A1 ist ein insbesondere als Gabelstapler ausgeführtes Flurförderfahrzeug mit einer Steuerungseinrichtung beschrieben, in der sensorisch erfasste Daten zu Ermittlung des aktuellen Fahr- und Beladungszustands verarbeitet werden. Abhängig von dem ermittelten Fahr- und Beladungszustand werden dann die erzielbare oder erzielte Arbeitsgeschwindigkeit, die Anfahr- und Bremsbeschleunigung sowie die Fahrgeschwindigkeit reduziert.

Außerdem sind aus dem Bereich der Straßenfahrzeuge Einrichtungen und Steuerungsverfahren bekannt, mit denen bei einer Abbremsung eines Fahrzeugs, insbesondere einer Sattelzugmaschine ohne Sattelauflieger, ein Umkippen über die Vorderachse verhindert werden kann.

So ist zum Beispiel in der DE 198 42 315 B4 ein Verfahren zur Abbremsung eines Fahrzeugs, insbesondere einer ohne Sattelauflieger betriebenen Sattelzugmaschine, offenbart, bei dem ständig die Achslast an der Hinterachse sensorisch erfasst und bei Unterschreitung eines festgelegten Achslastgrenzwertes das Fehlen eines Sattelauflieger erkannt wird. Bei fehlendem Sattelauflieger wird der Bremsdruck in den Radbremszylindern der Vorderachse bei Vorwärtsfahrt abgesenkt und dadurch die maximale Bremsverzögerung reduziert. Die Absenkung des Bremsdruckes in den Radbremszylindern der Vorderachse erfolgt über eine entsprechende Ansteuerung der zugeordneten ABS-Regelventile.

Aus der DE 101 56 773 A1 sind eine Einrichtung und ein Steuerungsverfahren einer ABS-Bremsanlage eines Fahrzeugs, insbesondere einer Sattelzugmaschine, bekannt, bei denen der aktuelle Last- und Beladungszustand ermittelt und daraus ein maximal zulässiger Bremsdruck in den Radbremszylindern der Vorderachse berechnet wird, mit dem bei einer Abbremsung des Fahrzeugs bei Vorwärtsfahrt ein Umkippen über die Vorderachse verhindert werden soll. Die Begrenzung des Bremsdruckes in den Radbremszylindern der Vorderachse erfolgt durch eine entsprechende Ansteuerung der zugeordneten ABS-Regelventile.

Es kann somit für alle Fahrzeugarten als Stand der Technik angesehen werden, dass durch eine Ermittlung des Beladungs- und Fahrzustandes des jeweiligen Fahrzeugs sowie eine davon abhängige Begrenzung oder Reduzierung des maximalen Bremsdruckes in den Radbremszylindern der Vorderachse bei einer Abbremsung des Fahrzeugs bei Vorwärtsfahrt ein Umkippen über die Vorderachse verhindert werden kann. Dabei wird der Bremsdruck in den betreffenden Radbremszylindern bei einer mit einem Antiblockiersystem (ABS) versehenen hydraulischen oder pneumatischen Bremsanlage zweckmäßigerweise durch eine entsprechende Ansteuerung der zugeordneten ABS-Regelventile begrenzt oder reduziert.

Es sind jedoch auch Fahrsituationen möglich, in denen das Umkippen des Fahrzeugs über die Vorderachse im Vergleich zu einem Zusammenstoß mit einem anderen Fahrzeug oder dem Anfahren eines Fußgängers das geringere Übel darstellt und daher von dem Fahrer einer Kippverhinderung vorgezogen wird.

Der vorliegenden Erfindung lag daher die Aufgabe zugrunde, eine Einrichtung und ein Verfahren zur Abbremsung eines Fahrzeugs der eingangs genannten Art vorzustellen, mit denen das Fahrzeug in einer Notbremssituation trotz einer vorhandenen Kippverhinderungsfunktion mit der maximal möglichen Bremsverzögerung abgebremst werden kann.

Diese Aufgabe ist durch eine Einrichtung mit den Merkmalen des Anspruchs 1 sowie durch ein Verfahren gemäß dem unabhängigen Verfahrensanspruchs gelöst. Vorteilhafte Weiterbildungen sind in den jeweils abhängigen Ansprüchen definiert.

Demnach betrifft die Erfindung zunächst eine Einrichtung zur Abbremsung eines Fahrzeugs mit einer Frontlastaufnahmevorrichtung, beispielsweise eines Flurförderfahrzeugs, mit Sensoren zur Messung der Masse sowie der Schwerpunktlage einer aufgenommenen Last, mit einer elektronischen Auswertungs- und Steuereinheit zur Auswertung der Sensordaten sowie zur Ermittlung einer maximalen Bremsverzögerung bei Vorwärtsfahrt zur Vermeidung eines Umkippens des Fahrzeugs über die Vorderachse, sowie mit einer von der Auswertungs- und Steuereinheit zur Begrenzung oder Reduzierung des in den Radbremszylindern der Vorderachse wirksamen Bremsdruckes ansteuerbaren, mit einem Antiblockiersystem ABS versehenen hydraulischen oder pneumatischen Bremsanlage.

Gemäß der Erfindung ist bei dieser Einrichtung vorgesehen, dass mindestens ein solcher an der Bremsanlage angeordneter Sensor vorgesehen ist, an dessen Sensorsignal von der Auswertungs- und Steuereinheit eine Notbremssituation erkennbar ist, und dass die Auswertungs- und Steuereinheit derartig ausgebildet und eingerichtet ist, dass mittels dieser bei Erkennen einer Notbremssituation eine solche Notbremsfunktion aktivierbar und steuerbar ist, durch welche die Begrenzung oder Reduzierung des in den Radbremszylindern der Vorderachse wirksamen Bremsdruckes aufgehoben wird sowie mit Ausnahme eines ABS-Regelbetriebs der volle über ein Hauptbremsventil eingesteuerte Bremsdruck in den Radbremszylindern der Vorderachse anliegt

Wenn bei einer Abbremsung des Fahrzeugs während einer Vorwärtsfahrt anhand des Sensorsignals des mindestens einen Sensors eine Notbremssituation erkannt wird, wird demnach die vorhandene Kippverhinderungsfunktion deaktiviert, durch welche ein Umkippen des Fahrzeugs über die Vorderachse, jedoch auch die maximal mögliche Bremsverzögerung verhindert wird. Somit kann der Fahrer das Fahrzeug unter Inkaufnahme eines möglichen Umkippens über die Vorderachse mit maximaler Bremsverzögerung abbremsen und damit zum Beispiel einen Zusammenstoß mit einem anderen Fahrzeug oder das Anfahren eines Fußgängers verhindern.

Der Sensor zur Erkennung einer Notbremssituation kann als ein Wegsensor ausgebildet sein, der an dem Hauptbremsventil angeordnet ist, und mittels dem mit Erreichen oder Überschreiten eines vorgegebenen Grenzstellweges s_{Br_lim} eines Steuerkolbens eine Notbremssituation erkennbar ist.

Ein dazu alternativ oder zusätzlich zu dem an dem Hauptbremszylinder angeordneten Wegsensor vorgesehener Sensor zur Erkennung einer Notbremssituation kann auch als ein Drucksensor ausgebildet sein, der an eine zwischen dem Hauptbremsventil und einem ABS-Regelventil der Vorderachse angeordnete Hauptbremsleitung angeschlossen ist, und mittels dem mit Erreichen oder Überschreiten eines vorgegebenen Grenzbremsdruckes p_{Br_lim} eine Notbremssituation erkennbar ist.

Weiterhin kann ein manuell betätigbarer Taster vorhanden sein, mittels dem die Notbremsfunktion durch den Fahrer des Fahrzeugs manuell per Hand auslösbar ist.

Wie erwähnt betrifft die Erfindung auch ein Verfahren zur Abbremsung eines Fahrzeugs mit einer Frontlastaufnahmevorrichtung, beispielsweise eines Flurförderfahrzeugs. Bei diesem Verfahren werden die Masse sowie die Schwerpunktlage einer aufgenommenen Last zunächst sensorisch ermittelt. Anschließend werden diese Sensordaten ausgewertet und eine maximale Bremsverzögerung bei Vorwärtsfahrt zur Vermeidung eines Umkippens des Fahrzeugs über die Vorderachse ermittelt. Sodann wird eine mit einem Antiblockiersystem ABS versehene hydraulische oder pneumatische Bremsanlage derart angesteuert, dass der in den Radbremszylindern der Vorderachse wirksame Bremsdruck p_{Br_R} begrenzt oder reduziert wird.

Gemäß der Erfindung ist bei diesem Verfahren zusätzlich vorgesehen, dass mittels des Sensorsignals mindestens eines an der Bremsanlage angeordneten Sensors bei Erreichen oder Überschreiten eines vorgegebenen Grenzwertes eine Notbremssituation erkannt wird, und dass bei Erkennen einer solchen Notbremssituation eine Notbremsfunktion aktiviert und gesteuert wird, durch welche die Begrenzung oder Reduzierung des in den Radbremszylindern der Vorderachse wirksamen Bremsdruckes aufgehoben ist, so dass mit Ausnahme eines ABS-Regelbetriebs der volle über ein Hauptbremsventil eingesteuerte Bremsdruck p_{Br_S} in den Radbremszylindern der Vorderachse anliegt.

Das Vorliegen einer Notbremssituation kann durch die Auswertung des Sensorsignals eines Wegsensors erkannt werden, der an dem Hauptbremsventil angeordnet ist, wenn der sensorisch erfasste Stellweg s_{Br_S} eines Steuerkolbens einen vorgegebenen Grenzstellweg s_{Br_lim} erreicht oder überschritten hat (s_{Br_S} ≥ s_{Br_lim}).

Alternativ dazu oder zusätzlich kann das Vorliegen einer Notbremssituation auch durch die Auswertung des Sensorsignals eines Drucksensors erkannt werden, welcher an eine zwischen dem Hauptbremsventil und einem ABS-Regelventil der Vorderachse angeordnete Hauptbremsleitung angeschlossen ist, sofern der sensorisch erfasste Bremsdruck p_{Br_S} einen vorgegebenen Grenzbremsdruck p_{Br_lim} erreicht oder überschritten hat (p_{Br_S} ≥ p_{Br_lim}).

Schließlich kann verfahrensgemäß vorgesehen sein, dass durch die Aktivierung der Notbremsfunktion ein im Fahrzeug vorhandener Airbag und/oder ein Gurtstraffer eines Sicherheitsgurtsystems aktiviert werden. Hierdurch kann der Fahrer des Fahrzeugs selbst geschützt werden, wenn er sich entschließt, das Fahrzeug über die Vorderachse kippen zu lassen, um einen gegebenenfalls unbeteiligten Dritten schadensfrei zu halten.

Die Erfindung wird nachstehend anhand eines in der beigefügten Zeichnung dargestellten Ausführungsbeispiels näher erläutert. In der Zeichnung zeigt
Fig. 1 eine erfindungsgemäße Einrichtung zur Abbremsung eines Fahrzeugs in einer schematischen Darstellung,
Fig. 2a einen ersten Teil eines zweiteiligen Diagramms zur Veranschaulichung des Ablaufs des erfindungsgemäßen Verfahrens zur Abbremsung eines Fahrzeugs, und
Fig. 2b einen zweiten Teil des zweiteiligen Diagramms zur Veranschaulichung des Ablaufs des erfindungsgemäßen Verfahrens zur Abbremsung eines Fahrzeugs.

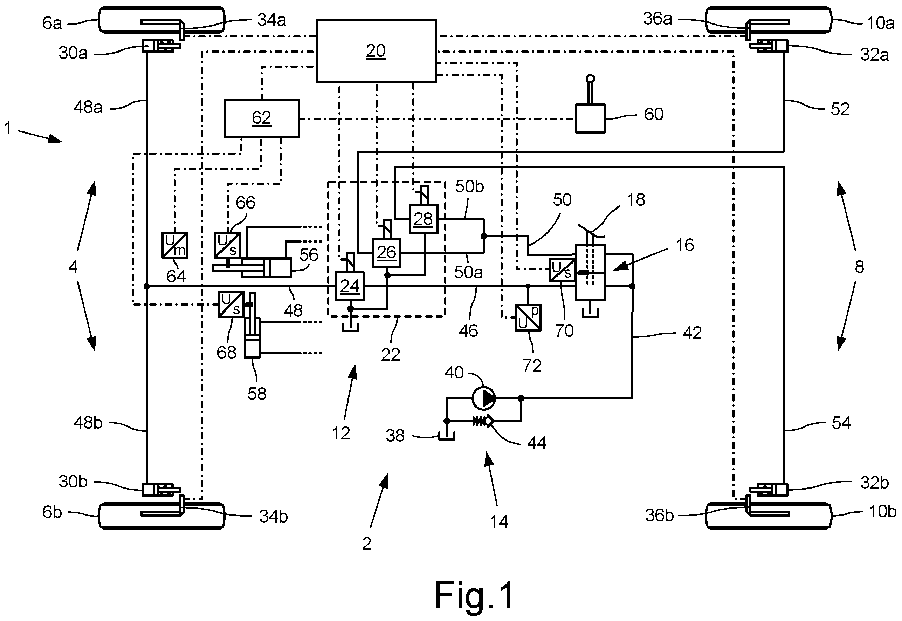

Bei dem in Fig. 1 schematisch dargestellten und die erfindungsgemäße Einrichtung 1 aufweisenden Fahrzeug 2 handelt es sich beispielhaft um ein Flurförderfahrzeug mit Frontlastaufnahmevorrichtung, insbesondere um einen Teleskopradlader mit einem nicht näher dargestellten Teleskoptragarm, an dessen vorderen Ende eine Last befestigt werden kann. Das Fahrzeug 2 ist zweispurig ausgebildet und weist eine Vorderachse 4 und eine Hinterachse 8 mit jeweils zwei Fahrzeugrädern 6a, 6b; 10a, 10b auf. Das Fahrzeug 2 ist mit einer hydraulischen Bremsanlage 12 ausgerüstet, die mit einem Antiblockiersystem (ABS) versehen ist. Die Bremsanlage 12 umfasst eine Druckversorgungseinrichtung 14, ein mittels eines Bremspedals 18 betätigbares Hauptbremsventil 16, eine elektronische Bremssteuereinheit 20, einen drei ABS-Regelventile 24, 26, 28 enthaltenden ABS-Ventilblock 22 sowie vier Radbremszylinder 30a, 30b; 32a, 32b und vier Drehzahlsensoren 34a, 34b; 36a, 36b, die jeweils an einem Fahrzeugrad 6a, 6b; 10a, 10b der Fahrzeugachsen 4, 8 angeordnet sind.

Die Druckversorgungseinrichtung 14 weist eine Ölpumpe 40 auf, mittels welcher Drucköl aus einem Sammelbehälter 38 in eine Versorgungsleitung 42 förderbar ist. Der Ölpumpe 40 ist ein in Rückflussrichtung öffnendes Rückschlagventil 44 parallel geschaltet, welches als ein Druckbegrenzungsventil wirksam ist. An die endseitig verzweigte Versorgungsleitung 42 ist das zweikanalig ausgeführte Hauptbremsventil 16 angeschlossen.

An den Ausgang des ersten Kanals des Hauptbremsventils 16 ist eine Hauptbremsleitung 46 der Vorderachse 4 angeschlossen, welche über das erste ABS-Regelventil 24 des ABS-Ventilblocks 22 und eine endseitig verzweigte Achsbremsleitung 48, 48a, 48b mit den Radbremszylindern 30a, 30b der Vorderachse 4 verbunden beziehungsweise verbindbar ist.

An den Ausgang des zweiten Kanals des Hauptbremsventils 16 ist eine endseitig verzweigte Hauptbremsleitung 50, 50a, 50b der Hinterachse 8 angeschlossen, deren erster Leitungszweig 50a über das zweite ABS-Regelventil 26 des ABS-Ventilblocks 22 und eine erste Radbremsleitung 52 mit dem Radbremszylinder 32a des rechten Fahrzeugrades 10a der Hinterachse 8 und deren zweiter Leitungszweig 50b über das dritte ABS-Regelventil 28 des ABS-Ventilblocks 22 und eine zweite Radbremsleitung 54 mit dem Radbremszylinder 32b des linken Fahrzeugrades 10b der Hinterachse 8 verbunden beziehungsweise verbindbar ist.

Die ABS-Regelung erfolgt in an sich bekannter Weise über die Bremssteuereinheit 20, welche hierzu über elektrische Sensorleitungen mit den an den Fahrzeugrädern 6a, 6b; 10a, 10b angeordneten Drehzahlsensoren 34a, 34b; 36a, 36b und über nicht mit Bezugszeichen versehene elektrische Steuerleitungen mit den ABS-Regelventilen 24, 26, 28 verbunden ist.

Die Bremsanlage 12 weist einen ersten Bremskreis für die Vorderachse 4 auf, welcher die Hauptbremsleitung 46, das erste ABS-Regelventil 24 und die Achsbremsleitung 48 mit den Leitungszweigen 48a, 48b umfasst. Die ABS-Regelung der Radbremsen an der Vorderachse 4 erfolgt somit nicht radselektiv sondern gemeinsam. Für die Hinterachse 8 weist die Bremsanlage 12 einen zweiten Bremskreis auf, der die Hauptbremsleitung 50 mit den Leitungszweigen 50a, 50b, das zweite ABS-Regelventil 26 und das dritte ABS-Regelventil 28 sowie die beiden Radbremsleitungen 52, 54 umfasst. Die ABS-Regelung der Radbremsen an der Hinterachse 8 erfolgt somit radselektiv.

Der Teleskoptragarm des Fahrzeugs 2 ist mittels eines ersten hydraulischen Stellzylinders 56 in seiner Länge verstellbar und mittels eines zweiten hydraulischen Stellzylinders 58 um eine Querachse schwenkbar. Die beiden Stellzylinder 56, 58 sind von dem Fahrer mittels einer Steuerkonsole 60 ansteuerbar, welche über mindestens eine elektrische Steuerleitung mit einer elektronischen Laststeuereinheit 62 verbunden ist. Von der Laststeuereinheit 62 werden pro Stellzylinder 56, 58 jeweils mindestens zwei nicht näher dargestellte Magnetventile derart angesteuert, dass die Druckräume der Stellzylinder 56, 58 zur Umsetzung der über die Steuerkonsole 60 eingegebenen Steuerbefehle mit Drucköl befüllt oder in einen Sammelbehälter entleert werden.

Zur Messung der Masse einer aufgenommenen Last ist am äußeren Ende des Teleskoptragarms ein Gewichtssensor 64 angeordnet, welcher über eine nicht näher bezeichnete elektrische Sensorleitung mit der Laststeuereinheit 62 verbunden ist. Zur Messung der Länge des Teleskoptragarms ist an dem ersten Stellzylinder 56 ein erster Wegsensor 66 angeordnet, welcher über eine ebenfalls nicht näher bezeichnete elektrische Sensorleitung mit der Laststeuereinheit 62 verbunden ist. Zur Messung der Schwenkhöhe beziehungsweise des Schwenkwinkels des Teleskoptragarms ist an dem zweiten Stellzylinder 58 ein zweiter Wegsensor 68 angeordnet, der ebenfalls über eine elektrische Sensorleitung mit der Laststeuereinheit 62 verbunden ist. Aus den Sensorsignalen der genannten Sensoren 64, 66, 68 werden in der Laststeuereinheit 62 die Masse und die Schwerpunktlage der von den Fahrzeug 2 aufgenommenen Last bestimmt und diese Werte über eine Datenleitung an die Bremssteuereinheit 20 übermittelt. Die Laststeuereinheit 62 und die Bremssteuereinheit 20 können baulich auch in einer gemeinsamen Steuereinheit zusammengefasst sein.

In der Bremssteuereinheit 20 ist eine Kippverhinderungsfunktion in Form eines Steuerungsprogramms abgespeichert, mit der beim Abbremsen des Fahrzeugs 2 bei Vorwärtsfahrt die in den Radbremsen der Vorderachse 4 wirksame Bremskraft in Abhängigkeit von der Masse und der Schwerpunktlage der aufgenommenen Last begrenzt oder reduziert wird, um ein Umkippen des Fahrzeugs 2 über die Vorderachse 4 zu verhindern. Die Begrenzung oder Reduzierung der Bremskraft an der Vorderachse 4 erfolgt über eine entsprechende Ansteuerung des ersten ABS-Regelventils 24, durch die der in den Radbremszylindern 30a, 30b der Vorderachse 4 wirksame Bremsdruck begrenzt oder reduziert wird.

Um trotz der durch die Kippverhinderungsfunktion reduzierten Bremsverzögerung zu ermöglichen, dass der Fahrer das Fahrzeug in einer Notbremsfunktion mit maximaler Bremsverzögerung abbremsen kann, ist an dem Hauptbremsventil 16 ein dritter Wegsensor 70 angeordnet, mittels dem der Stellweg s_{Br_S} eines mittels des Bremspedals 18 verschiebbaren Stellkolbens gemessen wird. Der dritte Wegsensor 70 ist erkennbar über eine elektrische Sensorleitung mit der Bremssteuereinheit 20 verbunden. Zusätzlich ist zu diesem Zweck ein Drucksensor 72 an die Hauptbremsleitung 46 der Vorderachse 4 angeschlossen, mittels dem der über das Bremspedal 18 eingesteuerte Bremsdruck p_{Br_S} gemessen wird, und der über eine elektrische Sensorleitung mit der Bremssteuereinheit 20 verbunden ist.

Wenn der sensorisch erfasste Stellweg s_{Br_S} des Stellkolbens des Hauptbremsventils 16 einen vorgegebenen Grenzstellweg s_{Br_lim} erreicht oder überschreitet und/oder der sensorisch erfasste Bremsdruck p_{Br_S} in der Hauptbremsleitung 46 der Vorderachse 4 einen vorgegebenen Grenzbremsdruck p_{Br_lim} erreicht oder überschreitet, wird die Begrenzung oder Reduzierung des in den Radbremszylindern 30a, 30b der Vorderachse 4 wirksamen Bremsdruckes p_{Br_R} aufgehoben. Dadurch liegt mit Ausnahme eines ABS-Regelbetriebs der volle über das Hauptbremsventil 16 eingesteuerte Bremsdruck p_{Br_S} in den Radbremszylindern 30a, 30b der Vorderachse 4 an, so dass das Fahrzeug 2 dann mit der maximal möglichen Bremsverzögerung abgebremst wird. Mit einer derartigen Notbremsung kann zum Beispiel ein Zusammenstoß mit einem anderen Fahrzeug oder das Anfahren eines Fußgängers verhindert werden, wobei ein mögliches Umkippen des Fahrzeugs 2 über die Vorderachse 4 in Kauf genommen wird.

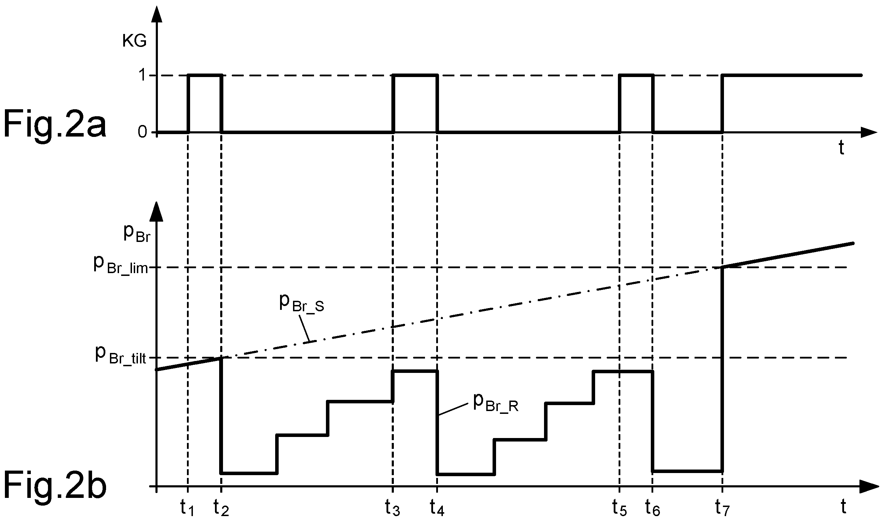

Der Steuerungsablauf einer derartigen Notbremsfunktion ist den beiden Teildiagrammen der Figuren 2a und 2b veranschaulicht. Im oberen Teildiagramm gemäß Fig. 2a ist die durch die Auswertung der Sensordaten während einer Abbremsung des Fahrzeugs 2 ermittelte Kippgefahr KG über die Vorderachse 4 über der Zeit t dargestellt, wobei mit KG = 0 eine nicht vorhandene Kippgefahr und mit KG = 1 eine vorhandene Kippgefahr bezeichnet sind.

In dem unteren Teildiagramm gemäß Fig. 2b sind der über das Hauptbremsventil 16 in die Hauptbremsleitung 46 der Vorderachse 4 eingesteuerte und mittels des Drucksensors 72 gemessene Bremsdruck p_{Br_S} sowie der über das ABS-Regelventil 24 in die Achsbremsleitung 48 durchgesteuerte und somit in den Radbremszylindern 30a, 30b der Vorderachse 4 anliegende Bremsdruck p_{Br_R} über der Zeit t abgebildet.

Das Fahrzeug 2 befindet sich in der hier angenommenen Situation in der Vorwärtsfahrt und wird von dem Fahrer durch eine Betätigung des Bremspedals 18 abgebremst.

Hierdurch steigt der in die Hauptbremsleitung 46 der Vorderachse 4 über das Hauptbremsventil 16 eingesteuerte Bremsdruck p_{Br_S} aufgrund einer zunehmenden Stellkraft auf das Bremspedal 18 und eines zunehmenden Stellweges des Bremspedals 18 stetig an. Mit der Annäherung des Bremsdruckes p_{Br_S} an einen kritischen Kippbremsdruck p_{Br_tilt}, der aus der sensorisch erfassten Masse und der Schwerpunktlage einer aufgenommenen Last sowie fahrzeugspezifischen Parametern des Fahrzeugs 2 ermittelt wurde, wird zum Zeitpunkt t₁ eine gegebene Kippgefahr KG erkannt und der in den Radbremszylindern 30a, 30b der Vorderachse 4 anliegende Bremsdruck p_{Br_R} zum Zeitpunkt t₂ durch eine entsprechende Ansteuerung des zugeordneten ABS-Regelventils 24 abgesenkt.

Anschließend wird der in den Radbremszylindern 30a, 30b der Vorderachse 4 wirksame Bremsdruck p_{Br_R} stufenweise erhöht, bis bei der Annäherung an den Kippbremsdruck p_{Br_tilt} zum Zeitpunkt t3 erneut eine Kippgefahr KG erkannt wird. Danach wird der Bremsdruck p_{Br_R} zum Zeitpunkt t₄ wieder abgesenkt und erneut stufenweise erhöht, bis bei der Annäherung an den Kippbremsdruck p_{Br_tilt} zum Zeitpunkt t₅ nochmals eine Kippgefahr KG erkannt wird. Anschließend wird der Bremsdruck p_{Br_R} zum Zeitpunkt t₆ wieder abgesenkt, jedoch abschließend zum Zeitpunkt t₇ bis an den über das Hauptbremsventil 16 eingesteuerten Bremsdruck p_{Br_S} angehoben, weil dieser zum Zeitpunkt t₇ einen vorgegebenen Grenzbremsdruck p_{Br_lim} erreicht hat.

Mit dem Erreichen oder Überschreiten des Grenzbremsdruckes p_{Br_lim} durch den eingesteuerten Bremsdruck p_{Br_S} wird eine Notbremssituation erkannt und eine Notbremsfunktion aktiviert, in der die Begrenzung oder Reduzierung des in den Radbremszylindern 30a, 30b der Vorderachse 4 wirksamen Bremsdruckes p_{Br_R} aufgehoben ist. Dadurch liegt in den Radbremszylindern 30a, 30b der Vorderachse 4 mit Ausnahme eines ABS-Regelbetriebs der volle über das Hauptbremsventil 16 eingesteuerte Bremsdruck p_{Br_S} an, so dass das Fahrzeug 2 mit der maximal möglichen Bremsverzögerung abgebremst und damit zum Beispiel ein Zusammenstoß mit einem anderen Fahrzeug oder das Anfahren eines Fußgängers verhindert werden kann. Ein mögliches Umkippen des Fahrzeugs 2 über die Vorderachse 4 wird dabei jedoch in Kauf genommen, da dieses von dem Fahrer des Fahrzeugs 2 als weniger nahteilig beurteilt wurde.

Das Auslösen der Notbremsfunktion kann von dem Fahrer auch durch Betätigen eines Notfalltasters erfolgen. Unabhängig von den genannten Aktivierungsarten kann für den Fahrer ein Airbag am Fahrzeug 2 ausgelöst und/oder ein Gutstraffer eines Sicherheitsgurtes in Funktion gesetzt werden.

### Bezugszeichenliste

- 1: Einrichtung zur Abbremsung eines Fahrzeugs
- 2: Fahrzeug
- 4: Vorderachse
- 6a, 6b: Erstes Fahrzeugrad, zweites Fahrzeugrad
- 8: Hinterachse
- 10a, 10b: Drittes Fahrzeugrad, viertes Fahrzeugrad
- 12: Bremsanlage
- 14: Druckversorgungseinrichtung
- 16: Hauptbremsventil
- 18: Bremspedal
- 20: Bremssteuereinheit
- 22: ABS-Ventilblock
- 24: Erstes ABS-Regelventil
- 26: Zweites ABS-Regelventil
- 28: Drittes ABS-Regelventil
- 30a, 30b: Erster Radbremszylinder, zweiter Radbremszylinder
- 32a, 32b: Dritter Radbremszylinder, vierter Radbremszylinder
- 34a, 34b: Erster Drehzahlsensor, zweiter Drehzahlsensor
- 36a, 36b: Dritter Drehzahlsensor, vierter Drehzahlsensor
- 38: Sammelbehälter
- 40: Ölpumpe
- 42: Versorgungsleitung
- 44: Rückschlagventil
- 46: Hauptbremsleitung
- 48: Achsbremsleitung
- 48a, 48b: Leitungszweige von Achsbremsleitung
- 50: Hauptbremsleitung
- 50a, 50b: Leitungszweige von Hauptbremsleitung 50
- 52: Erste Radbremsleitung
- 54: Zweite Radbremsleitung
- 56: Erster Stellzylinder
- 58: Zweiter Stellzylinder
- 60: Steuerkonsole
- 62: Laststeuereinheit
- 64: Gewichtssensor
- 66: Erster Wegsensor
- 68: Zweiter Wegsensor
- 70: Dritter Wegsensor
- 72: Drucksensor
- ABS: Antiblockiersystem
- KG: Kippgefahr
- P_{Br}: Bremsdruck
- p_{Br_S}: Eingesteuerter Bremsdruck (sensorisch erfasst)
- p_{Br_lim}: Grenzbremsdruck
- p_{Br_R}: Bremsdruck, Radbremsdruck
- P_{Br_tilt}: Kippbremsdruck
- s_{Br}: Stellweg eines Steuerkolbens des Hauptbremsventils
- s_{Br_S}: Stellweg (sensorisch erfasst)
- s_{Br_lim}: Grenzstellweg
- t: Zeit
- t₁ - t₇: Zeitpunkte

## Patentansprüche

1. Einrichtung (1) zur Abbremsung eines Fahrzeugs (2) mit einer Frontlastaufnahmevorrichtung, beispielsweise eines Flurförderfahrzeugs, mit Sensoren (64, 66, 68) zur Messung der Masse sowie der Schwerpunktlage einer aufgenommenen Last, mit einer elektronischen Auswertungs- und Steuereinheit (20, 62) zur Auswertung der Sensordaten sowie zur Ermittlung einer maximalen Bremsverzögerung (p_{Br_tilt}) bei Vorwärtsfahrt zur Vermeidung eines Umkippens des Fahrzeugs (2) über die Vorderachse (4), sowie mit einer von der Auswertungs- und Steuereinheit (20, 62) zur Begrenzung oder Reduzierung des in den Radbremszylindern (30a, 30b) der Vorderachse (4) wirksamen Bremsdruckes (p_{Br_R}) ansteuerbaren, mit einem Antiblockiersystem (ABS) versehenen hydraulischen oder pneumatischen Bremsanlage (12), **dadurch gekennzeichnet, dass** mindestens ein solcher an der Bremsanlage (12) angeordneter Sensor (70, 72) vorgesehen ist, an dessen Sensorsignal von der Auswertungs- und Steuereinheit (20, 62) eine Notbremssituation erkennbar ist, und dass die Auswertungs- und Steuereinheit (20, 62) derartig ausgebildet und eingerichtet ist, dass mittels dieser bei Erkennen einer Notbremssituation eine solche Notbremsfunktion aktivierbar und steuerbar ist, durch welche die Begrenzung oder Reduzierung des in den Radbremszylindern (30a, 30b) der Vorderachse (4) wirksamen Bremsdruckes (p_{Br_R}) aufgehoben wird sowie mit Ausnahme eines ABS-Regelbetriebs der volle über ein Hauptbremsventil (16) eingesteuerte Bremsdruck (p_{Br_S}) in den Radbremszylindern (30a, 30b) der Vorderachse (4) anliegt.

2. Einrichtung nach Anspruch 1, **dadurch gekennzeichnet, dass** der Sensor (70) zur Erkennung einer Notbremssituation als ein Wegsensor ausgebildet ist, welcher an dem Hauptbremsventil (16) angeordnet ist, und mittels dem mit Erreichen oder Überschreiten eines vorgegebenen Grenzstellweges (s_{Br_lim}) eines Steuerkolbens eine Notbremssituation erkennbar ist.

3. Einrichtung nach Anspruch 1, **dadurch gekennzeichnet, dass** der Sensor (72) zur Erkennung einer Notbremssituation als ein Drucksensor ausgebildet ist, der an eine zwischen dem Hauptbremsventil (16) und einem ABS-Regelventil (24) der Vorderachse (4) angeordnete Hauptbremsleitung (46) angeschlossen ist, und mittels dem mit Erreichen oder Überschreiten eines vorgegebenen Grenzbremsdruckes (p_{Br_lim}) eine Notbremssituation erkennbar ist.

4. Einrichtung nach einem der vorherigen Ansprüche, **dadurch gekennzeichnet, dass** ein manuell betätigbarer Taster vorhanden ist, mittels dem die Notbremsfunktion durch den Fahrer des Fahrzeugs manuell auslösbar ist.

5. Verfahren zur Abbremsung eines Fahrzeugs (2) mit einer Frontlastaufnahmevorrichtung, beispielsweise eines Flurförderfahrzeugs, bei dem die Masse sowie die Schwerpunktlage einer aufgenommenen Last sensorisch ermittelt werden, bei dem diese Sensordaten anschließend ausgewertet werden sowie daraus eine maximale Bremsverzögerung bei Vorwärtsfahrt zur Vermeidung eines Umkippens des Fahrzeugs (2) über die Vorderachse (4) ermittelt wird, und bei dem eine mit einem Antiblockiersystem (ABS) versehene hydraulische oder pneumatische Bremsanlage (12) derart angesteuert wird, dass der in den Radbremszylindern (30a, 30b) der Vorderachse (4) wirksame Bremsdruck (p_{Br_R}) begrenzt oder reduziert wird, **dadurch gekennzeichnet, dass** mittels des Sensorsignals mindestens eines an der Bremsanlage (12) angeordneten Sensors (70, 72) bei Erreichen oder Überschreiten eines vorgegebenen Grenzwertes eine Notbremssituation erkannt wird, und dass bei Erkennen einer solchen Notbremssituation eine Notbremsfunktion aktiviert und gesteuert wird, durch welche die Begrenzung oder Reduzierung des in den Radbremszylindern (30a, 30b) der Vorderachse (4) wirksamen Bremsdruckes (p_{Br_R}) aufgehoben ist, so dass mit Ausnahme eines ABS-Regelbetriebs der volle über ein Hauptbremsventil (16) eingesteuerte Bremsdruck (p_{Br_S}) in den Radbremszylindern (30a, 30b) der Vorderachse (4) anliegt.

6. Verfahren nach Anspruch 5, **dadurch gekennzeichnet, dass** das Vorliegen einer Notbremssituation durch die Auswertung des Sensorsignals eines Wegsensors (70) erkannt wird, welcher an dem Hauptbremsventil (16) angeordnet ist, sobald der sensorisch erfasste Stellweg (s_{Br_S}) eines Steuerkolbens einen vorgegebenen Grenzstellweg (s_{Br_lim}) erreicht oder überschritten hat (s_{Br_S} ≥ s_{Br_lim}).

7. Verfahren nach Anspruch 5, **dadurch gekennzeichnet, dass** das Vorliegen einer Notbremssituation durch die Auswertung des Sensorsignals eines Drucksensors (72) erkannt wird, welcher an eine zwischen dem Hauptbremsventil (16) und einem ABS-Regelventil (24) der Vorderachse (4) angeordnete Hauptbremsleitung (46) angeschlossen ist, sobald der sensorisch erfasste Bremsdruck (p_{Br_S}) einen vorgegebenen Grenzbremsdruck (p_{Br_lim}) erreicht oder überschritten hat (p_{Br_S} ≥ p_{Br_lim}).

8. Verfahren nach einem der Verfahrensansprüche, **dadurch gekennzeichnet, dass** durch die Aktivierung der Notbremsfunktion ein im Fahrzeug vorhandener Airbag und/oder ein Gurtstraffer eines Sicherheitsgurtsystems aktiviert wird.

## Claims

1. A device (1) for braking a vehicle (2) with a front load receiving device, for example an industrial truck, with sensors (64, 66, 68) for measuring the mass as well as the center of gravity of a received load, with an electronic evaluation and control unit (20, 62) for evaluating the sensor data as well as for determining a maximum brake deceleration (p_{Br_tilt}) in forward travel to prevent a tilting of the vehicle (2) over the front axle (4), and with a hydraulic or pneumatic brake system (12) provided with an anti-lock brake system (ABS) which can be actuated by the evaluation and control unit (20, 62) to limit or reduce the effective brake pressure (p_{Br_R}) in the wheel brake cylinders (30a, 30b) of the front axle (4), , **characterized in that** at least one such sensor (70, 72) arranged on the brake system (12) is provided, at whose sensor signal an emergency braking situation can be detected by the evaluation and control unit (20, 62), and that the evaluation and control unit (20, 62) is configured and equipped such that by means of these, upon detection of an emergency braking situation, such an emergency braking function can be activated and controlled, by means of which the limitation or reduction of the brake pressure (p_{Br_R}) effective in the wheel brake cylinders (30a, 30b) of the front axle (4) is cancelled and with the exception of an ABS control operation, the full brake pressure (p_{Br_S}) is introduced in a controlled manner via a main brake valve (16) in the wheel brake cylinders (30a, 30b) of the front axle (4).

2. The device according to claim 1, **characterized in that** the sensor (70) for detecting an emergency braking situation is configured as a displacement sensor, which is arranged on the main brake valve (16), and by means of which, upon reaching or exceeding a predefined limit actuation travel (s_{Br_lim}) of a control piston, an emergency braking situation can be detected.

3. The device according to claim 1, **characterized in that** the sensor (72) for detecting an emergency braking situation is configured as a pressure sensor, which is connected to a main brake line (46) arranged between the main brake valve (16) and an ABS control valve (24) of the front axle (4), and by means of which, upon the reaching or exceeding of a predefined limit brake pressure (p_{Br_lim}), an emergency braking situation can be detected.

4. The device according to any of the foregoing claims, **characterized in that** a manually activatable switch is present, by means of which the emergency braking situation can be manually triggered by the driver of the vehicle.

5. A method for decelerating a vehicle (2) with a front load receiving device, for example an industrial truck, in which the mass and the center of gravity of a received load are determined by sensors, in which these sensor data are subsequently evaluated and a maximum braking deceleration in forward travel is determined therefrom to prevent a tilting of the vehicle (2) over the front axle (4), and in which a hydraulic or pneumatic brake system (12) provided with an antilock brake system (ABS) is actuated such that the effective brake pressure (p_{Br_R}) in the wheel brake cylinders (30a, 30b) of the front axle (4) is limited or reduced, **characterized in that** by means of the sensor signal of at least one sensor (70, 72) arranged on the brake system (12), upon reaching or exceeding a predefined limit value an emergency braking situation is detected, and that upon the detection of such an emergency braking situation, an emergency braking function is activated and controlled, by means of which the limitation or reduction of the effective brake pressure (p_{Br_R}) in the wheel brake cylinders (30a, 30b) of the front axle (4) is cancelled, so that with the exception of an ABS control operation the full brake pressure (p_{Br_S}) is introduced in a controlled manner via a main brake valve (16) in the wheel brake cylinders (30a, 30b) of the front axle (4).

6. The method according to claim 5, **characterized in that** the presence of an emergency braking situation is detected by the evaluation of the sensor signal of a displacement sensor (70), which is arranged on the main brake valve (16), as soon as the actuation travel (s_{Br_S}) of a control piston determined by the sensors has reached or exceeded (s_{Br_S}≥s_{Br_lim}) a predefined limit actuation travel (s_{Br_lim}).

7. The method according to claim 5, **characterized in that** the presence of an emergency braking situation is detected by the evaluation of the sensor signal of a pressure sensor (72), which is connected to a main brake line (46) arranged between the main brake valve (16) and an ABS control valve (24) of the front axle (4), as soon as the brake pressure (p_{Br_S}) determined by the sensors has reached or exceeded (p_{Br_S}≥p_{Br_lim}) a predefined limit brake pressure (p_{Br_lim}).

8. The method according to any of the method claims, **characterized in that** by activating the emergency braking function, an airbag and/or a belt tensioner of a safety belt system present in the vehicle is activated.

## Revendications

1. Dispositif (1) pour le freinage d'un véhicule (2) avec un dispositif de réception de charge frontale, par exemple d'un chariot de manutention motorisé, avec des capteurs (64, 66, 68) pour la mesure de la masse ainsi que de la position du centre de gravité d'une charge reçue, avec une unité d'évaluation et de commande (20, 62) électronique pour l'évaluation des données de capteur ainsi que pour la détermination d'une décélération de freinage maximale (p_{Br_tilt}) lors d'une marche avant pour éviter un renversement du véhicule (2) par l'intermédiaire de l'essieu avant (4), ainsi qu'avec une installation de freinage (12) hydraulique ou pneumatique pouvant être commandée par l'unité d'évaluation et de commande (20, 62) pour la limitation ou réduction de la pression de freinage (p_{Br_R}) agissant dans les cylindres de frein de roue (30a, 30b) de l'essieu avant (4), pourvue d'un système antiblocage des roues (ABS), **caractérisé en ce qu'**au moins un capteur (70, 72) disposé sur l'installation de freinage (12), au signal de capteur duquel une situation de freinage d'urgence peut être repérée par l'unité d'évaluation et de commande (20, 62), est prévu, et que l'unité d'évaluation et de commande (20, 62) est réalisée et conçue de telle sorte qu'une telle fonction de freinage d'urgence peut être activée et commandée au moyen de celle-ci lors du repérage d'une situation de freinage d'urgence, par laquelle la limitation ou réduction de la pression de freinage (p_{Br_R}) agissant dans les cylindres de frein de roue (30a, 30b) de l'essieu avant (4) est levée et à l'exception d'un mode de régulation ABS la pression de freinage (p_{Br_S}) totale introduite par l'intermédiaire d'une soupape de freinage principale (16) s'applique dans les cylindres de frein de roue (30a, 30b) de l'essieu avant (4).

2. Dispositif selon la revendication 1, **caractérisé en ce que** le capteur (70) pour le repérage d'une situation de freinage d'urgence est réalisé sous la forme d'un capteur de course, lequel est disposé sur la soupape de freinage principale (16), et au moyen duquel avec l'atteinte ou le dépassement d'une course de réglage limite (S_{Br_lim}) prédéfinie d'un piston de commande une situation de freinage d'urgence peut être repérée.

3. Dispositif selon la revendication 1, **caractérisé en ce que** le capteur (72) pour le repérage d'une situation de freinage d'urgence est réalisé sous la forme d'un capteur de pression, qui est raccordé à une conduite de freinage principale (46) disposée entre la soupape de freinage principale (16) et une soupape de régulation ABS (24) de l'essieu avant (4), et au moyen duquel avec l'atteinte ou le dépassement d'une pression de freinage limite (p_{Br_lim}) prédéfinie une situation de freinage d'urgence peut être repérée.

4. Dispositif selon l'une quelconque des revendications précédentes, **caractérisé en ce qu'**une touche pouvant être actionnée manuellement est présente, au moyen de laquelle la fonction de freinage d'urgence peut être déclenchée manuellement par le conducteur du véhicule.

5. Procédé pour le freinage d'un véhicule (2) avec un dispositif de réception de charge frontale, par exemple d'un chariot de manutention motorisé, selon lequel la masse ainsi que la position du centre de gravité d'une charge reçue sont déterminées par un capteur, selon lequel ces données de capteur sont ensuite évaluées et une décélération de freinage maximale lors d'une marche avant pour éviter un renversement du véhicule (2) par l'intermédiaire de l'essieu avant (4) en est déduite, et selon lequel une installation de freinage (12) hydraulique ou pneumatique pourvue d'un système antiblocage des roues (ABS) est commandée de telle sorte que la pression de freinage (p_{Br_R}) agissant dans les cylindres de frein de roue (30a, 30b) de l'essieu avant (4) est limitée ou réduite, **caractérisé en ce qu'**une situation de freinage d'urgence est repérée au moyen du signal de capteur au moins d'un capteur (70, 72) disposé sur l'installation de freinage (12) lors de l'atteinte ou du dépassement d'une valeur limite prédéfinie, et que lors du repérage d'une telle situation de freinage d'urgence une fonction de freinage d'urgence est activée et commandée, par laquelle la limitation ou réduction de la pression de freinage (p_{Br_R}) agissant dans les cylindres de frein de roue (30a, 30b) de l'essieu avant (4) est levée, de sorte qu'à l'exception d'un mode de régulation ABS la pression de freinage (p_{Br_S}) totale introduite par l'intermédiaire d'une soupape de freinage principale (16) s'applique dans les cylindres de frein de roue (30a, 30b) de l'essieu avant (4).

6. Procédé selon la revendication 5, **caractérisé en ce que** la présence d'une situation de freinage d'urgence est repérée par l'évaluation du signal de capteur d'un capteur de course (70), lequel est disposé sur la soupape de freinage principale (16), dès que la course de réglage (S_{Br_S}) d'un piston de commande détectée par le capteur a atteint ou dépassé une course de réglage limite (S_{Br_lim}) prédéfinie (S_{Br_S} ≥ S_{Br_lim}).

7. Procédé selon la revendication 5, **caractérisé en ce que** la présence d'une situation de freinage d'urgence est repérée par l'évaluation du signal de capteur d'un capteur de pression (72), lequel est raccordé à une conduite de freinage principale (46) disposée entre la soupape de freinage principale (16) et une soupape de régulation ABS (24) de l'essieu avant (4), dès que la pression de freinage (p_{Br_S}) détectée par le capteur a atteint ou dépassé une pression de freinage limite (p_{Br_lim}) prédéfinie (p_{Br_S} ≥ p_{Br_lim}).

8. Procédé selon l'une quelconque des revendications précédentes, **caractérisé en ce qu'**un coussin de sécurité gonflable présent dans le véhicule et/ou un tendeur de ceinture de sécurité d'un système de ceinture de sécurité est activé par l'activation de la fonction de freinage d'urgence.
